(19) Europäisches Patentamt / European Patent Office / Office européen des brevets

(11) **EP 4 024 588 A1**

(12) **EUROPEAN PATENT APPLICATION**
published in accordance with Art. 153(4) EPC

(43) Date of publication:
**06.07.2022 Bulletin 2022/27**

(21) Application number: **21792409.1**

(22) Date of filing: **16.04.2021**

(51) International Patent Classification (IPC):
*H01M 50/222* (2021.01)   *H01M 50/227* (2021.01)
*H01M 50/229* (2021.01)   *H01M 50/231* (2021.01)
*H01M 50/24* (2021.01)

(52) Cooperative Patent Classification (CPC):
**H01M 50/222; H01M 50/227; H01M 50/229; H01M 50/231; H01M 50/24;** Y02E 60/10

(86) International application number:
**PCT/JP2021/015783**

(87) International publication number:
**WO 2021/215371 (28.10.2021 Gazette 2021/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.04.2020 JP 2020077534**

(71) Applicant: **Teijin Limited**
**Osaka 530-0005 (JP)**

(72) Inventors:
• **WAKITA, Masanobu**
**Osaka-shi, Osaka 530-0005 (JP)**
• **TESHIMA, Masatomo**
**Osaka-shi, Osaka 530-0005 (JP)**
• **SHIMIZU, Hiroyuki**
**Osaka-shi, Osaka 530-0005 (JP)**
• **TAMURA, Shunsuke**
**Gotenba-shi, Shizuoka 412-0048 (JP)**
• **MOUNAI, Takuya**
**Gotenba-shi, Shizuoka 412-0048 (JP)**

(74) Representative: **CPW GmbH**
**Kasinostraße 19-21**
**42103 Wuppertal (DE)**

(54) **BATTERY BOX COMPONENT WHEREIN FIBER-REINFORCED PLASTIC IS PROVIDED WITH REFRACTORY LAYER, AND METHOD FOR PRODUCING BATTERY BOX COMPONENT**

(57) The present invention provides a battery box component which is obtained by providing a fiber-reinforced plastic with a refractory layer, said fiber-reinforced plastic using a thermosetting resin as a matrix resin, while containing reinforcing fibers, wherein: the reinforcing fibers are discontinuous reinforcing fibers having a weight average fiber length of from 1 mm to 100 mm; the thermosetting resin is composed of at least one resin that is selected from the group consisting of an unsaturated polyester resin, a vinyl ester resin, and an epoxy resin; the thickness X of the fiber-reinforced plastic is not less than 1.0 mm but less than 5 mm; and the refractory layer contains an acrylic resin or a urethane resin and a foaming composition. The present invention also provides a method for producing a battery box component.

FIG.1

**Description**

TECHNICAL FIELD

The present invention relates to a battery box component provided with a fire-resistant layer on a fiber reinforced plastic and a method for producing a battery box component.

BACKGROUND ART

In an electric vehicle, since an in-vehicle battery occupies a considerable weight and mounting space, numerous studies have been made on a structure of the in-vehicle battery. For example, in Patent Literature 1, in order to achieve both flame retardancy and mechanical properties with respect to an electromagnetic wave shield, a carbon fiber reinforced polypropylene resin composition containing a flame retardant is molded to produce a battery box component for a vehicle.

In addition, as a method for imparting fire-resistant property, Patent Literature 2 describes a method of coating a substrate with a specific coating material that is heat-foamable and fire-resistant.

Patent Literature 3 describes an invention of providing a fire-resistant layer, in which a laminate layer that is a fire-resistant layer is laminated on a sheet molding compound (SMC), and then the laminate layer and the sheet molding compound are simultaneously molded.

CITATION LIST

PATENT LITERATURE

Patent Literature 1: JP-A-2014-62189
Patent Literature 2: JP-A-2012-6986
Patent Literature 3: WO2020/014470

SUMMARY OF INVENTION

TECHNICAL PROBLEM

However, the battery box component obtained by molding the carbon fiber reinforced polypropylene resin composition described in Patent Literature 1 is provided with a flame retardant, but the fiber reinforced plastic itself absorbs heat when exposed to a flame, causing deterioration of the resin. As a result, the mechanical properties of the fiber reinforced plastic after burning deteriorate, and the battery stored inside the battery box component falls off.

The battery box described in Patent Literature 3 has the following problems.

Problem 1 in Patent Literature 3: when the laminate layer is molded after being laminated with the sheet molding compound, the laminate layer impedes the flow of the sheet molding compound during molding. In particular, when the shape of a molded product after molding is complicated, the laminate layer does not follow the shape and cannot be molded, or the flow of the sheet molding compound tears the laminate layer (fire-resistant layer). Generally, when molding using the sheet molding compound as a material, the material is charged with a projected area ratio of less than 100% with respect to a mold, so that the sheet molding compound flows during the molding. When it is desired to perform molding by laminating the laminate layer on a molded product having a complicated shape, it is necessary to dispose the laminate layer (film or sheet) in advance in the mold along the complicated shape of the mold (preform is necessary). However, the preform step is complicated and the production efficiency is poor.

Problem 2 in Patent Literature 3: when the laminate layer (fire-resistant layer) containing a thermal intumescent agent is molded at the same time with the sheet molding compound, the thermal intumescent agent may expand due to heating during curing of the sheet molding compound. Even when the excessive expansion of the thermal intumescent agent can be prevented, generally, the thermal intumescent agent has a high coefficient of linear expansion, and the laminate layer may expand at a temperature at which the sheet molding compound is cured, making it impossible to remove the mold.

Therefore, the present invention has been made in view of the above problems in the related art, and an object thereof is to provide a battery box component which has a good fire-resistant property and mechanical properties so as not to drop a battery stored in a fiber reinforced plastic after a fire-resistance test.

SOLUTION TO PROBLEM

As a result of intensive studies, the present inventors have found that the above-described problems can be solved by the following means. Thus, the present invention has been completed.

[1] A battery box component including: a fiber reinforced plastic containing a thermosetting resin as a matrix resin and reinforcing fibers; and a fire-resistant layer on the fiber reinforced plastic, in which

the reinforcing fibers are discontinuous reinforcing fibers having a weight average fiber length of 1 mm or more and 100 mm or less,
the thermosetting resin is at least one selected from the group consisting of an unsaturated polyester-based resin, a vinyl ester-based resin, and an epoxy resin,
the fiber reinforced plastic has a thickness X of 1.0 mm or more and less than 5 mm, and
the fire-resistant layer contains an acrylic resin or a urethane-based resin, and a foaming composition.

[2] The battery box component according to [1], in which the fire-resistant layer contains a urethane-based resin, and the fire-resistant layer is adjacent to the fiber reinforced plastic.
[3] The battery box component according to [2], in which the thermosetting resin is an unsaturated polyester-based resin or a vinyl ester-based resin.
[4] The battery box component according to any one of [1] to [3], in which the fire-resistant layer has a thickness Y of 0.1 mm or more and less than 1.0 mm.
[5] The battery box component according to [4], in which a relationship between the thickness X of the fiber reinforced plastic and the thickness Y of the fire-resistant layer satisfy $0.01 < Y/X < 1.0$.
[6] The battery box component according to any one of [1] to [5], in which the fire-resistant layer has a mass per unit area of 100 g/m$^2$ to 1200 g/m$^2$.
[7] The battery box component according to any one of [1] to [6], in which the reinforcing fibers are glass fibers.
[8] The battery box component according to any one of [1] to [7], in which the fiber reinforced plastic has a specific gravity of 2.1 g/cm$^3$ or less, and the fire-resistant layer has a specific gravity of 1.5 g/cm$^3$ or less.
[9] The battery box component according to any one of [1] to [8], in which the battery box component is for use in a vehicle.
[10] The battery tray according to [9], in which the battery box component is a battery tray, and has a retention rate of tensile strength after a burning test of 40% or more as compared with tensile strength before the burning test.
[11] The battery tray according to [9] or [10], in which the battery box component is a battery tray, and further including a top layer laminated on the fire-resistant layer.
[12] The battery box component according to any one of [1] to [9], in which the battery box component is a battery tray or a battery cover.
[13] A method for producing the battery box component according to any one of [1] to [12], the method including:

producing the fiber reinforced plastic by molding a sheet molding compound, in which
the battery box component has a concavo-convex shape.

[14] The method for producing a battery box component according to [13], further including:
providing the fire-resistant layer on the fiber reinforced plastic by using in-mold coating or spray coating.
[15] The battery box component according to any one of [1] to [12], in which the fire-resistant layer is provided on an edge surface of the fiber reinforced plastic.
[16] The battery box component according to [15], in which the fire-resistant layer is provided on a side surface and an entire edge surface of the fiber reinforced plastic.
[17] The battery box component according to [16], in which the battery box component is a battery tray.

ADVANTAGEOUS EFFECTS OF INVENTION

The battery box component provided with the fire-resistant layer on the fiber reinforced plastic described in the present invention have an excellent fire-resistant property and mechanical properties as compared with those in the related art.

BRIEF DESCRIPTION OF DRAWINGS

Fig. 1 is an exploded perspective view showing a battery box, which is an example of the present invention.

Fig. 2 is a perspective view showing an energy absorption member provided in the battery tray, which is an example of the present invention.

Fig. 3 is a schematic diagram showing a state where a test piece is directly exposed to a flame.

Fig. 4 is a schematic diagram showing a cross section of the battery tray, which is an example of the present invention.

Fig. 5 is a schematic diagram showing a cross section of the battery tray, which is an example of the present invention.

Fig. 6 is a graph showing temperatures of an upper surface and a lower surface of the test piece during a fire-resistance test in Example 2.

Fig. 7 is a graph showing temperatures of an upper surface and a lower surface of the test piece during a fire-resistance test in Comparative Example 3.

DESCRIPTION OF EMBODIMENTS

A battery box component according to the present invention is a battery box component including: a fiber reinforced plastic containing a thermosetting resin as a matrix resin and reinforcing fibers; and a fire-resistant layer on the fiber reinforced plastic, in which

the reinforcing fibers are discontinuous reinforcing fibers having a weight average fiber length of 1 mm or more and 100 mm or less,

the thermosetting resin is at least one selected from the group consisting of an unsaturated polyester-based resin, a vinyl ester-based resin, and an epoxy resin,

the fiber reinforced plastic has a thickness X of 1.0 mm or more and less than 5 mm, and

the fire-resistant layer contains an acrylic resin or a urethane resin, and a foaming composition.

Hereinafter, an embodiment of the present invention will be described, but the present invention is not limited thereto.

[Battery Tray and Battery Cover]

The battery box component according to the present invention is preferably a battery tray or a battery cover.

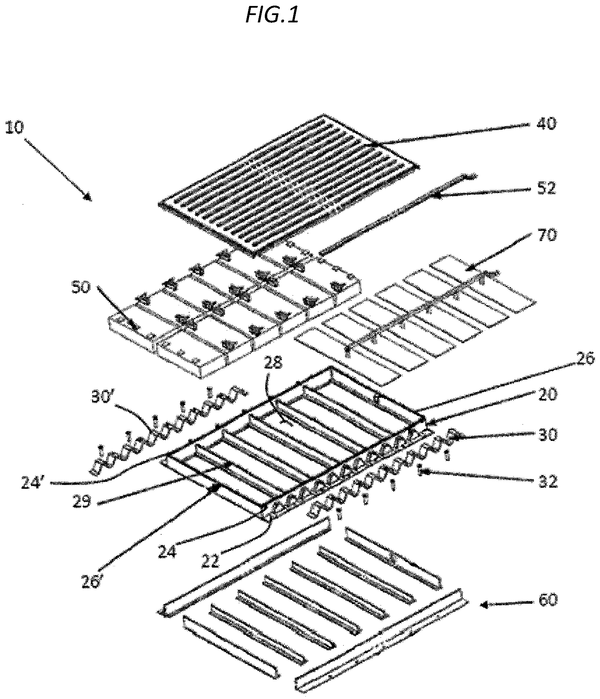

A battery (50 in Fig. 1) is housed in a battery box including a battery tray (20 in Fig. 1) and a battery cover (40 in Fig. 1). In the present invention, each of the battery tray and the battery cover is obtained by using a product formed by molding a fiber reinforced plastic containing reinforcing fibers and a thermosetting resin as a matrix resin. The battery box component is preferably used for a vehicle.

[Fire-resistant Property of Battery Cover or Battery Tray]

Since the battery cover needs to have a fire-resistant property against a flame from a battery present in the battery box, a fire-resistant layer is required to face the inside of the battery box. In contrast, since the battery tray needs to be fire-resistant to a flame from the outside of the battery box (a flame from the outside of the vehicle when the battery tray is for in-vehicle use), a fire-resistant layer facing the outside of the battery box is required.

In the event of an accident, the battery tray (20 in Fig. 1) may be burned by the leaked gasoline and may be exposed to a flame of 700°C to 800°C. Therefore, a fire-resistant property under stricter conditions is required than that of the battery cover in the related art. That is, it is preferable that the battery tray according to the present invention is provided with: a fiber reinforced plastic containing reinforcing fibers and a thermosetting resin as a matrix resin, and a fire-resistant layer on the fiber reinforced plastic, the reinforcing fibers are discontinuous reinforcing fibers having a weight average fiber length of 1 mm or more and 100 mm or less, the thermosetting resin is at least one selected from the group consisting of an unsaturated polyester-based resin, a vinyl ester-based resin, and an epoxy resin, the fiber reinforced plastic has a thickness X of 1.5 mm or more and less than 5 mm, and the fire-resistant layer contains an acrylic resin or a urethane-based resin, and a foaming composition.

However, the capacity of batteries has increased with the spread of electric vehicles. In recent years, battery covers are required to have a fire-resistant property of about 800°C to 1200°C.

The battery box component according to the present invention is a battery tray.

The followings are preferable.

(1) The battery tray preferably includes: a flange; a first bottom surface portion; a peripheral wall erected on an outer periphery of the first bottom surface portion; a first inner wall connected to the first bottom surface portion; and a second inner wall connected to the first bottom surface portion.

(2) The flange, the first bottom surface portion, the peripheral wall, the first inner wall, and the second inner wall are integrally formed of a fiber reinforced plastic.

(3) The first bottom surface portion has bends connected to the first inner wall portion and the second inner wall portion.

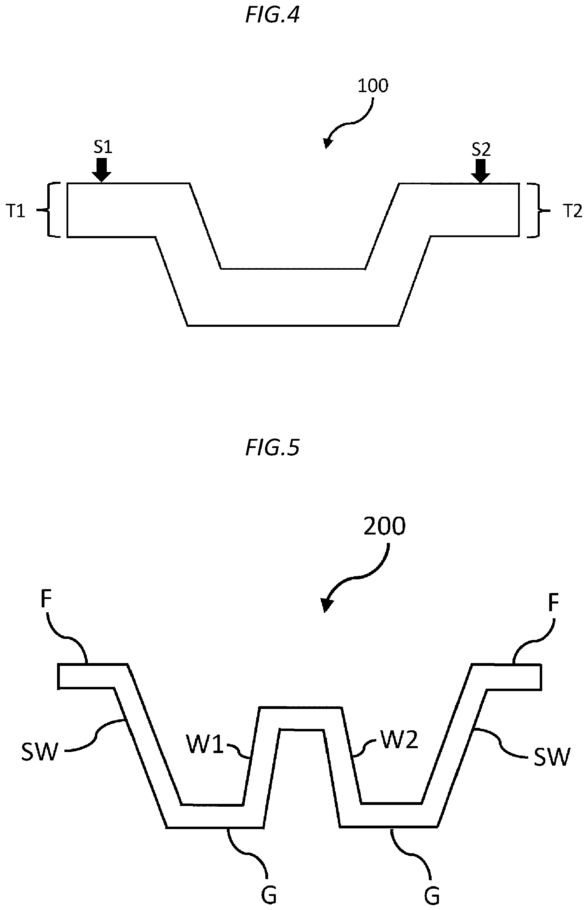

Fig. 5 is a schematic diagram showing a cross section of an example of the battery tray according to the present invention. A battery tray 200 in Fig. 5 includes flanges F, first bottom surface portions G, peripheral walls SW erected on outer peripheries of the first bottom surface portions G, a first inner wall W1 connected to the first bottom surface portion G, and a second inner wall W2 connected to the first bottom surface portion G. The flanges G, the first bottom surface portions G, the peripheral walls SW, the first inner wall W1, and the second inner wall W2 integrally form a fiber reinforced plastic. The first bottom surface portions G are bent and connected to the first inner wall W1 and the second inner wall portion W2.

[Fiber Reinforced Plastic]

The battery box component includes a fiber reinforced plastic containing a thermosetting resin as a matrix resin and reinforcing fibers.

It is preferable to prepare a fiber reinforced plastic with a sheet molding compound (sometimes called SMC) using glass fibers, and the weight can be reduced as compared with a metal battery box.

In addition, the sheet molding compound can be easily molded even in a complicated shape such as a battery tray or a battery cover due to high moldability thereof.

That is, the sheet molding compound is molded to produce a fiber reinforced plastic, and a battery box component having a concavo-convex shape can be produced. The sheet molding compound has fluidity and formability higher than those of continuous fibers, and can easily produce a rib and a boss.

[Reinforcing Fiber]

The reinforcing fibers for use in the present invention are not particularly limited, and are preferably one or more reinforcing fibers selected from the group consisting of carbon fibers, glass fibers, aramid fibers, boron fibers, and basalt fibers. The reinforcing fibers are more preferably glass fibers.

[Weight Average Fiber Length]

1. Discontinuous reinforcing fibers

In recent years, the size of an in-vehicle battery has increased, and vertical and horizontal dimensions of a battery box are 1 m × 1 m or 1.5 m × 1.5 m. When such a large battery box is to be prepared, in the fiber reinforced plastic prepared by injection molding described in Patent Literature 1, the weight average fiber length of the reinforcing fibers is about 0.1 mm to 0.3 mm, and the mechanical properties for storing a large battery cannot be guaranteed.

Therefore, the reinforcing fibers for use in the present invention are discontinuous reinforcing fibers having a weight average fiber length of 1 mm or more and 100 mm or less. The weight average fiber length is more preferably 1 mm to 70 mm, and still more preferably 1 mm to 50 mm.

It is preferable because the fluidity is excellent when the weight average fiber length of the reinforcing fibers is 100 mm or less. On the other hand, when the reinforcing fibers are 1 mm or more, a structural material having excellent mechanical properties can be obtained.

In the present invention, discontinuous reinforcing fibers having different fiber lengths may be used in combination. In other words, the discontinuous reinforcing fibers used in the present invention may have a single peak or a plurality of peaks in a distribution of the weight average fiber length.

The average fiber length of the reinforcing fibers can be calculated based on the following equation (a), for example, by measuring the fiber lengths of 100 fibers randomly selected from a molded product to a unit of 1 mm using a caliper or the like.

When the fiber length of each reinforcing fiber is set to Li and the number of the measured fibers is set to j, the number average fiber length (Ln) and the weight average fiber length (Lw) are obtained according to the following equations (a) and (b).

$$Ln = \Sigma Li/j \ ...... \ \text{Equation (a)}$$

$$Lw = (\Sigma Li^2)/(\Sigma Li) \ ...... \ \text{Equation (b)}$$

When the fiber length is constant, the number average fiber length and the weight average fiber length have the same value.

The extraction of the reinforcing fibers from the fiber reinforced plastic can be performed, for example, by subjecting the fiber reinforced plastic to a heat treatment and removing the thermosetting resin in a furnace.

2. Comparison with case of using continuous fibers as reinforcing fibers

Compared with a case where continuous fibers are used for the fiber reinforced plastic, an internal battery is more likely to fall off when the battery tray is exposed to a flame in a case where the discontinuous reinforcing fibers having a weight average fiber length of 1 mm or more and 100 mm or less are used. Generally, when the battery tray undergoes a fire due to an accident of the vehicle, a passenger can escape from the vehicle in a few minutes. When the battery falls out of the battery tray, a larger explosion may be caused. Therefore, the battery needs to be gripped on the battery tray while the passenger escapes (a few minutes), even when the reinforcing fibers are discontinuous reinforcing fibers (short fibers) having a weight average fiber length of 1 mm or more and 100 mm or less.

In the case of using continuous fibers, if burning continues for about several minutes, even when a part of resin is carbonized, the matrix resin in a region where the resin does not carbonize continues to grip the fibers, so that the battery does not easily fall off from the battery tray. Of course, even in a battery tray using continuous fibers, if burning continues for several tens of minutes to several hours, all the matrix resin is carbonized and the battery falls off. However, from the viewpoint of the time when the passenger escapes (about several minutes), it is not necessary to hold the battery in the battery box for a long time of several tens of minutes to several hours. That is, when continuous fibers are used (especially in a battery tray), there is no problem as in the present invention that "the internal battery tends to fall off when exposed to a flame for several minutes".

[Glass Fibers]

When the glass fibers are used as the reinforcing fibers, the average fiber diameter of the glass fibers is preferably 1 μm to 50 μm, and more preferably 5 μm to 20 μm. When the average fiber diameter is too small, it is difficult to impregnate the fibers with the thermosetting resin, and when the average fiber diameter is too large, the moldability and the processability are adversely influenced.

[Thermosetting Resin]

The fiber reinforced plastic in the present invention contains a thermosetting resin as a matrix resin.

The thermosetting resin in the present invention is at least one selected from the group consisting of an unsaturated polyester-based resin, a vinyl ester-based resin, and an epoxy resin. As the thermosetting resin, one kind may be used alone, or two or more kinds may be used in combination.

[Resin Composition]

A resin composition for forming the fiber reinforced plastic used for the present invention may further contain additives such as a thickener, an inorganic filler, a curing agent, a polymerization initiator, a polymerization inhibitor, pigments, and an internal mold release agent in addition to the reinforcing fibers and the thermosetting resin. As the additive, one kind may be used alone, or two or more kinds may be used in combination.

[Fire-resistant Layer]

In the present invention, a fire-resistant layer containing: an acrylic resin or a urethane-based resin; and a foaming composition, is provided on the fiber reinforced plastic.

It is preferable to provide a fire-resistant layer having a film thickness of 0.1 mm or more and less than 1.0 mm, so as to form a heat insulating layer with a foaming composition that foams 20 to 30 times during a fire-resistance test to exhibit the fire-resistant property.

The foaming composition is not particularly limited, and for example, ammonium polyphosphate is preferred.

The foaming composition is not foamed before the fire-resistance test, and starts foaming when heated.

Since the fire-resistant layer contains the foaming composition, when a sheet molding compound is molded to produce a fiber reinforced plastic, it is preferable to provide the fire-resistant layer after the molding is completed. When the fire-resistant layer is provided after molding the sheet molding compound, it is possible to prevent the foaming composition from foaming due to the heating for curing the sheet molding compound. When the fire-resistant layer is provided after completing the molding using the sheet molding compound, it is preferable to provide the fire-resistant layer by coating. The expression "the fire-resistant layer is provided after completing the molding" as used herein is a concept including providing the fire-resistant layer on the fiber reinforced plastic by an in-mold coating method or an open molding method.

The urethane resin is preferably a two-component type consisting of a main agent and a curing agent. Generally, since the two-component type causes a chemical reaction, the curing time is shortened and the physical properties are improved as compared with a one-component type urethane-based resin.

It is preferable that the fire-resistant layer of the battery box component is provided on an edge surface of the fiber reinforced plastic. It is not necessary to provide the fire-resistant layer on the entire edge surface, and the fire-resistant layer may be partially provided on the edge surface, and the edge surface without the fire-resistant layer may be covered with a metal or the like. It is more preferable that the entire edge surface is provided with the fire-resistant layer because it is not necessary to cover the edge surface area without the fire-resistant layer with a metal or the like. It is still more preferable that the fire-resistant layer is provided on (the fire-resistant layer covers) a side surface and at least a part of the edge surface of the fiber reinforced plastic. It is even more preferable that the fire-resistant layer is provided on (the fire-resistant layer covers) the entire side surface and edge surface of the fiber reinforced plastic.

The edge surface of the fiber reinforced plastic is the surface on the end of the fiber reinforced plastic, and is shown by, for example, T1 and T2 in Fig. 4. When the sheet molding compound is molded to produce the fiber reinforced plastic, the edge surface of the fiber reinforced plastic is formed at the same time as the molding is completed. The edge surface is not limited to the end portion of the object, and includes, for example, the surface of a hole formed in the center of a plate-shaped object.

The side surface of the fiber reinforced plastic means the surface exposed to the outside or an inner side surface (the surface on a storage side) when the battery box is formed. When the sheet molding compound is press-molded using an upper mold and a lower mold to produce the fiber reinforced plastic, the side surface is the surface of the fiber reinforced plastic that is in contact with the upper mold or the surface of the fiber reinforced plastic that is in contact with the lower mold immediately after the molding is completed.

For example, when the battery box component is a battery tray, it is preferable that an outer side surface of the battery tray and all edge surfaces of the battery tray are covered with a fire-resistant layer. The outer side surface of the battery tray is the surface that is exposed to the outside when it is a battery box.

Since the edge surface of the battery tray is covered with a fire-resistant layer, the heating from the edge surface can be prevented. In particular, since the reinforcing fibers of the present invention are discontinuous fibers having a weight average fiber length of 1 mm or more and 100 mm or less, when heating proceeds from the edge surface, the resin around the edge surface burns and the battery tray itself falls off.

The edge surface of the battery tray is, for example, the surface indicated by T1 and T2 in a battery tray 100 in Fig. 4.

A burnt portion of the resin around the edge surface that may occur in the fire-resistance test when the edge surface of the battery tray is not covered with the fire-resistant layer is, for example, a portion indicated by arrows S1 and S2 in the battery tray 100 in Fig. 4.

It is preferable that the edge surface of the battery tray is covered with the fire-resistant layer since, even when the edge surface of the battery tray catches fire, the fire will be extinguished naturally within 2 minutes.

When the fire-resistant layer is provided on the edge surface, it is preferable to perform coating by spray coating to provide the fire-resistant layer. When the fire-resistant layer is provided by in-mold coating, the fire-resistant layer on the edge surface may be partially peeled off in a deburring step, so that it is advisable to recoat the portion where peeling has occurred.

[Thickness]

1. Thickness X of fiber reinforced plastic

In the present invention, the thickness X of the fiber reinforced plastic is 1.0 mm or more and less than 5 mm, and preferably 1.5 mm or more and less than 5 mm. A thickness X of less than 5 mm is preferred from the viewpoint of weight reduction of a battery box. When the fiber reinforced plastic is less than 1.0 mm, the fiber reinforced plastic easily burns off when the fire-resistance test is performed, which causes a remarkable problem.

When the battery box component of the present invention is a battery tray, the thickness X of the fiber reinforced plastic is preferably 2 mm or more and less than 5 mm, and more preferably 3 mm or more and less than 5 mm.

On the other hand, when the battery box component of the present invention is a battery cover, the minimum thickness of the fiber reinforced plastic is preferably 1 mm to 4 mm, and more preferably 1 mm to 3 mm.

2. Thickness Y of fire-resistant layer

The thickness Y of the fire-resistant layer is preferably 0.1 mm or more and less than 1.0 mm. When the thickness is less than 1.0 mm, the weight of the battery cover or battery tray, which is battery box component, can be reduced.

On the other hand, when the thickness Y of the fire-resistant layer is 0.1 mm or more, it is easy to ensure a sufficient fire-resistant property.

The thickness of the fire-resistant layer is preferably 0.3 mm or more, and more preferably 0.5 mm or more. When the thickness of the fire-resistant layer is 0.5 mm or more, the fire-resistant property is stable.

3. Thickness X of fiber reinforced plastic and thickness Y of fire-resistant layer

The thickness X of the fiber reinforced plastic and the thickness Y of the fire-resistant layer preferably satisfy $0.01 < Y/X < 1.0$. It preferably satisfies $0.05 < Y/X < 0.5$, and more preferably satisfies $0.1 \leq Y/X < 0.2$. When $0.01 < Y/X$ is satisfied, the fire-resistant property can be easily ensured, and when $Y/X < 1.0$ is satisfied, lightness can be ensured.

4. Others

The mass per unit area of the fire-resistant layer is preferably 100 $g/m^2$ to 1200 $g/m^2$.

[Relationship between Fire-resistant Layer and Thermosetting Resin]

In a preferred combination of the thermosetting resin and the fire-resistant layer, the thermosetting resin is an unsaturated polyester-based resin or a vinyl ester-based resin, and the fire-resistant layer is an acrylic resin or a urethane-based resin, and a foaming composition. The thermosetting resin is selected in consideration of moldability, production cycle, resin strength, etc., and the fire-resistant layer is selected in consideration of weather resistance, curing time, resin strength, water resistance, etc.

In a more preferred combination of the thermosetting resin and the fire-resistant layer, the thermosetting resin is a vinyl ester-based resin or an unsaturated polyester-based resin, and the fire-resistant layer is a urethane-based resin containing a foaming composition.

In a still more preferred combination of the thermosetting resin and the fire-resistant layer, the thermosetting resin is a vinyl ester-based resin, and the fire-resistant layer is a urethane-based resin containing a foaming composition.

The fire-resistant layer in the present invention is preferably coated after the thermosetting resin is cured. The present inventors presume that the urethane-based resin is more likely to bond with the unreacted thermosetting resin than the acrylic resin because the urethane-based resin has more polar groups than the acrylic resin.

When the fire-resistant layer is provided on a metal substrate, it is generally necessary to provide a primer layer on the substrate in advance. However, when the urethane-based resin is used for the fire-resistant layer, the primer layer can be eliminated and it can be expected that the fire-resistant layer and the fiber reinforced plastic layer are preferably bonded to each other even when the fire-resistant layer is adjacent to the fiber reinforced plastic.

In addition, the thermosetting resin may be thinner than the unsaturated polyester-based resin when the vinyl ester-based resin is used.

The vinyl ester-based resin is not limited to a vinyl ester resin, but may be a modified vinyl ester resin obtained by modifying the vinyl ester resin.

[Fire-resistant Layer and Fiber Reinforced Plastic]

Further, as a further subject of the present invention, as described in Patent Literature 2, a technique of providing a foamable fire-resistant coating material on a base-treated steel frame in order to impart the steel frame with a fire-resistant property is known. However, a base layer (primer layer) is required for providing the fire-resistant layer, and coating for twice is required.

In a preferred embodiment of the present invention, it is preferable that the primer layer is eliminated and the fire-resistant layer is adjacent to the fiber reinforced plastic in order to improve the production efficiency. In the present invention, when a fire-resistant layer using an acrylic resin or a urethane-based resin is used, the primer layer can be eliminated because both the fiber reinforced plastic and the fire-resistant layer are organic materials.

[Specific Gravity]

The fiber reinforced plastic preferably has a specific gravity of 2.1 g/cm³ or less, and the fire-resistant layer preferably has a specific gravity of 1.7 g/cm³ or less, and more preferably 1.5 g/cm³ or less. The specific gravity of the fire-resistant layer is preferably 1.5 g/cm³ or less. When the weight ratio of the reinforcing fibers is reduced, the fiber reinforced plastic has a reduced density, and is easy to burn. Therefore, it is more important to provide a fire-resistant layer.
Generally, an acrylic resin fire-resistant coating has 1.33 g/cm³, and a urethane-based resin fire-resistant coating has 1.35 g/cm³.

[Retention Rate of Tensile Strength]

When the subject of the present invention is a battery tray for a vehicle, it is important to maintain the initial strength, and it is also extremely important to maintain the strength after burning. When the fiber reinforced plastic is used for the battery tray for a vehicle and continuous fibers are used as the reinforcing fibers, the stored battery will not fall off even when the resin burns out. This is because the battery is held by the continuous fibers.
However, in the case of using discontinuous reinforcing fibers, when the resin burns out, the discontinuous reinforcing fibers (1 mm or more and 100 mm or less) cannot hold the battery, and there is a risk that the battery falls off from the vehicle. Therefore, it is important that the fire-resistant layer is foamed by burning, the foamed heat insulating layer reduces heat conduction to the fiber reinforced plastic, and the burning of the resin is reduced. The retention rate of tensile strength after a burning test is preferably 40% or more, more preferably 50% or more, still more 70% or more, and even more 80% or more, as compared with tensile strength before the burning test.
In other words, the present invention preferably has the following configuration.
A battery box component including:

a fiber reinforced plastic containing a thermosetting resin as a matrix resin and reinforcing fibers; and
a fire-resistant layer on the fiber reinforced plastic, in which
the reinforcing fibers are discontinuous reinforcing fibers having a weight average fiber length of 1 mm or more and 100 mm or less,
the thermosetting resin is at least one selected from the group consisting of an unsaturated polyester-based resin, a vinyl ester-based resin, and an epoxy resin,
the fiber reinforced plastic has a thickness X of 1.0 mm or more and less than 5 mm,
the fire-resistant layer contains an acrylic resin or a urethane-based resin, and a foaming composition, and
a retention rate of tensile strength after a burning test is 40% or more as compared with tensile strength before the burning test.

The burning test is performed by using a method described in Supplementary Provision 8E, 3.2.2 to 3.7.4. of "Uniform provisions concerning the approval of vehicles with regard to specific requirements for the electric power train" described in European UN standard Regulation No. 100.
The retention rate of remained tensile strength can be calculated from the following equation (1).

$$\text{Retention rate of tensile strength (\%)} = (\text{tensile strength B after burning} \div \text{tensile strength A before burning}) \times 100 \ ... \ \text{Equation (1)}$$

In the present invention, the burning test is performed by using a method described in Supplementary Provision 8E, 3.2.2 to 3.7.4. of "Uniform provisions concerning the approval of vehicles with regard to specific requirements for the electric power train" described in European UN standard Regulation No. 100.
In the present invention, the tensile test shall be performed in accordance with ASTM D3039 (2019) under the condition of a load speed of 2 mm/min.

[Top Layer (Layer that improves water resistance)]

When it is desired to ensure the water resistance of the fire-resistant layer, it is preferable to provide a top layer on the fire-resistant layer. In other words, the top layer is preferably a layer that improves water resistance.
The material of the top layer is not limited, and is preferably an epoxy resin, a urethane-based resin, or a silicone resin. It is preferable to provide the top layer especially when the battery box component of the present invention is used as a battery tray for a vehicle. This is because the battery tray is located below the battery cover in the vehicle body, so that water resistance is often required.

The battery box component provided with the fire-resistant layer can prevent the temperature rise of the fiber reinforced plastic. Further, when the fire-resistant layer is used in an application where water resistance is not required, it is preferable not to provide a top layer. This is because the top layer tends to delay the initiation of foaming of the foaming composition contained in the fire-resistant layer. In other words, when used in an application where water resistance is not required, the fire-resistant layer is preferably provided on an outermost layer of the battery box component.

[Method of Providing Fire-resistant Layer]

As the fire-resistant layer, it is preferable to provide the fire-resistant layer on the fiber reinforced plastic by in-mold coating or spray coating. The in-mold coating method is a method of forming a coating on the surface of a molded product by injecting a coating agent into a mold without taking out the obtained molded product from the mold.

In addition, the fire-resistant layer may be attached to the fiber reinforced plastic by using flammable sheets such as mica sheets or flammable films. However, since the shape of the battery tray or the battery cover is complicated, it is preferable to provide the fire-resistant layer by coating rather than providing the fire-resistant layer by laminating sheets or films.

The fire-resistant layer of the present invention contains a foaming composition, and the temperature on the burned surface side can be lowered by foaming. Accordingly, the fire-resistant property is higher than that of using the mica sheet for burning for a long time (for example, 5 minutes or longer).

Examples

(Materials)

1. Fiber reinforced plastic

(i) Fiber reinforced plastic using sheet molding compound (SMC)

The following sheet molding compounds manufactured by Continental Structural Plastics (sometimes abbreviated as CSP) were prepared and molded into the fiber reinforced plastics described in Examples and Comparative Examples.

•Product number: CSP834E

Resin: vinyl ester-based resin
Fibers: E-glass fibers, fiber weight ratio Wf: 49%. The fiber weight ratio (Wf, unit: wt%) refers to a ratio of the weight of the reinforcing fibers to the weight of the entire fiber reinforced plastic including not only the reinforcing fibers and the matrix resin but also other additives.

(ii) Fiber reinforced plastic using continuous fibers (using epoxy resin)

•Fiber reinforced plastic of carbon fiber woven fabric
Pre-preg W-7U 61(100)/Q-112 manufactured by TEIJIN LIMITED

Configuration: (0/90°) × 7 ply laminated board was subjected to autoclave molding (130°C × 90 minutes).

Thickness: 3 mm
•Fiber reinforced plastic of glass fiber woven fabric

Glass epoxy laminated board (product number: PL-3762) manufactured by Sumitomo Bakelite Co., Ltd.
Thickness: 3 mm

2. Primer layer

Mitchacron Multi manufactured by Somay Q Technology Corporation

3. Fire-resistant coating

(i) Acrylic fire-resistant coating containing ammonium polyphosphate (foaming agent)

Product name: Taikalitt S-100 Base Coat manufactured by Nippon Paint Holdings Co., Ltd.

(ii) Polyurethane-based fire-resistant coating containing ammonium polyphosphate (foaming agent)

Product name: Nullifire Hybrid Base Coat SC902-A manufactured by Nullifire Ltd (iii) Fire-resistant coating containing a special modified acrylic resin and a non-halogen phosphorus flame retardant (non-foaming flame-retardant coating)

Product name: Landex Coat, flame-retardant, clear, S type, manufactured by

DAINICHI GIKEN KOGYO CO., LTD.

4. Top layer

- Fine Urethane U100 white (urethane-based) manufactured by Nippon Paint Holdings Co., Ltd.
- EPOALL #65-W (epoxy-based) manufactured by Dai Nippon Toryo Co., Ltd.

(Evaluation)

1. Evaluation of Fire-resistance

The test pieces prepared in Examples and Comparative Examples were bunt by using the method described in Supplementary Provision 8E, 3.2.2 to 3.7.4. of "Uniform provisions concerning the approval of vehicles with regard to specific requirements for the electric power train" described in European UN standard Regulation No. 100, and the test pieces before and after the burning were observed. Gasoline was used as the fuel, and the temperature at the time of burning was 700°C to 800°C.

(i) Evaluation of matrix form retention of fiber reinforced plastic

Good: after the fire-resistance test, the thickness of the fiber reinforced plastic was retained at 3 mm.
Bad: after the fire-resistance test, the thickness of the fiber reinforced plastic was less than 3 mm.

(ii) Evaluation of burning form by fire-resistance test

Carbonization of resin: the matrix resin (thermosetting resin) burned, but the fibers remained.

2. Retention rate of strength after fire-resistant property evaluation

2.1 Tensile test before burning

A 25 mm × 250 mm (width × length) piece was cut out from the test piece before burning and subjected to a tensile test.

2.2 Tensile test after burning

The burning test was performed by using the method described in Supplementary Provision 8E, 3.2.2 to 3.7.4. of "Uniform provisions concerning the approval of vehicles with regard to specific requirements for the electric power train" described in European UN standard Regulation No. 100, and then the tensile test was performed. Gasoline was used as the fuel, and the temperature at the time of burning was 700°C to 800°C. Specifically, the tensile test was performed through the following stages A, B, and C.

(i) Stage A: preheating

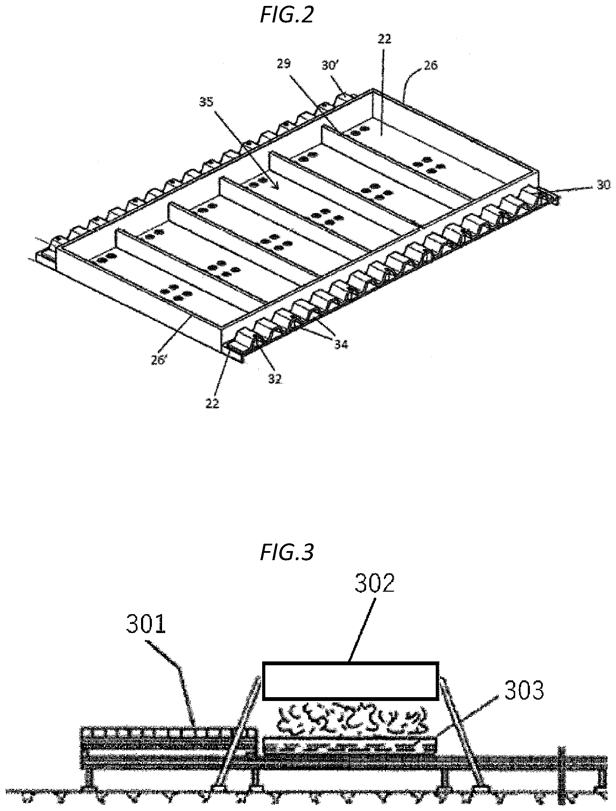

The fuel in a pan (303 in Fig. 3) was ignited at a distance of 3 m from the test piece (length 300 mm × width 300 mm × thickness 3 mm). After preheating for 60 seconds, the pan was placed under the test piece. The pan was too large to move due to the risk of liquid leakage, so the test piece and a test rig were moved to the pan instead of the pan.

(ii) Stage B: direct exposure to flame (Fig. 3)

The test piece was exposed to a flame from the burning fuel for 70 seconds.

(iii) Stage C: indirect exposure to flame

Immediately after the completion of stage B, a screen (301 in Fig. 3) was placed between the burning pan and the test piece. The test piece was exposed to the reduced flame for an additional 60 seconds.
A piece with a width of 25 mm × a length of 250 mm was cut out from a central region of the test piece after the burning and subjected to a tensile test.
2.3 Retention rate of(remained) tensile strength
The retention rate of tensile strength was calculated from the following equation (1).

$$\text{Retention rate of tensile strength (\%)} = (\text{tensile strength B after burning} \div \text{tensile strength A before burning}) \times 100 \dots \text{Equation (1)}$$

3. Fire-resistant property after water absorption

(1) Tensile test before water absorption

A piece with a width of 25 mm × a length of 250 mm was cut out from the test piece before water absorption and subjected to a tensile test. The result was defined as tensile strength A' before burning.

(2) Tensile test of test piece after water absorption and burning

The test piece was immersed in warm water at 40°C for 7 days and then air-dried for about 1 day. Then, a tensile test after the burning test was performed in the same manner as the method described in "2. Retention rate of strength after fire-resistant property evaluation" described above.

(3) Retention rate of tensile strength (after water absorption)

The retention rate of tensile strength (after water absorption) was calculated from the following equation (2).

$$\text{Retention rate of tensile strength (after water absorption) (\%)} = (\text{tensile strength B' after water absorption and burning} \div \text{tensile strength A' before water absorption and burning}) \times 100 \dots \text{Equation (2)}$$

4. Conditions of tensile test

The above tensile test was performed in accordance with ASTM D3039 (2019) under the condition of a load speed of 2 mm/min. The tensile test after the burning was performed on a piece with the width of 25 mm × the length of 250 mm cut out from the test piece after the burning. At this time, 110 mm of the 250 mm length of the test piece was the burned part. The number N of tests was 8 (N = 8).

5. Battery falling-off evaluation

5.1 Case of using discontinuous reinforcing fibers (Examples and Comparative Examples)

In the state where the matrix resin burned and the fibers remained (resin was carbonized), the fibers were not gripped by the resin and it was determined that the battery falls off from the battery tray due to the weight of the battery.

5.2 Case of using continuous fibers (Reference Examples)

In the state where the matrix resin burned and the fibers remained (resin was carbonized), since ends of the fibers are gripped by the resin in a region that did not burn, it was determined that the weight of the battery would not cause the battery to fall off from the battery tray.

[Example 1]

1. Preparation of fiber reinforced plastic

A sheet molding compound (product number: CSP834E) manufactured by CSP was heated, charged into a mold, and molded into a shape with a length of 300 mm × a width of 300 mm × a thickness of 3 mm.

2. Coating of fire-resistant coating

As a fire-resistant coating, product name: Taikalitt, brand: Taikalitt S-100 Base Coat (acrylic foam type coating) manufactured by Nippon Paint Holdings Co., Ltd. was coated by spraying so as to make a film thickness of 0.2 mm to prepare a test piece. The obtained test piece had a two-layer structure including a fiber reinforced plastic and a fire-resistant coating. Results are shown in Table 1.

[Examples 2 to 4]

A test piece in which the fire-resistant layer was provided on the fiber reinforced plastic was prepared in the same manner as in Example 1, except that the thickness of the fire-resistant layer was set to 0.3 mm, 0.4 mm, and 0.5 mm respectively, as shown in Table 1.

[Example 5]

A test piece was prepared and evaluated in the same manner as in Example 4, except that the fiber reinforced plastic with the fire-resistant layer was spray-coated, as a top layer, with Fine Urethane U100 manufactured by Nippon Paint Holdings Co., Ltd. to provide a 0.2 mm top layer. The mass per unit area of the top layer was 240 g/m$^2$.

[Example 6]

A test piece was prepared and evaluated in the same manner as in Example 4, except that the fiber reinforced plastic was spray-coated, as a primer layer, with Mitchacron Multi manufactured by Somay Q Technology Corporation and then spray-coated with trade name Taikalitt manufactured by Nippon Paint Holdings Co., Ltd. with a film thickness of 0.5 mm.

[Example 7]

A test piece was prepared and evaluated in the same manner as in Example 1, except that a fire-resistant coating Nullifire Hybrid Base Coat SC902-A manufactured by Nullifire Ltd was spray-coated a fire-resistant coating to a film thickness of 0.3 mm in order to provide a fire-resistant layer. Results are shown in Table 1.

[Example 8]

A test piece was prepared and evaluated in the same manner as in Example 7, except that the film thickness of the fire-resistant layer was 0.5 mm. Results are shown in Table 1.

[Example 9]

A test piece was prepared and evaluated in the same manner as in Example 8, except that the fiber reinforced plastic with the fire-resistant layer was spray-coated, as a top layer, with a modified epoxy-urethane resin-based coating EPOALL manufactured by Dai Nippon Toryo Co., Ltd. to provide a 0.2 mm top layer. Results are shown in Table 1. The mass per unit area of the top layer was 270 $g/m^2$.

[Comparative Example 1]

Evaluation was made in the same manner as in Example 1, except that the fire-resistant layer was not provided and only the fiber reinforced plastic was taken as a test piece. Results are shown in Table 1.

[Comparative Example 2]

A test piece was prepared and evaluated in the same manner as in Example 1, except that a non-foaming flame-retardant coating (Landex coat flame-retardant clear S type manufactured by DAINICHI GIKEN KOGYO CO., LTD.) was provided on the fiber reinforced plastic by spray coating to make a film thickness of 0.2 mm, instead of the fire-resistant layer. Results are shown in Table 1.

In Tables 1 and 2 below, the following abbreviations indicate the following contents, respectively.

GF: glass fibers
CF: carbon fibers
VE: vinyl ester-based resin
EP: epoxy resin

[Table 1]

| | Example 1 | Example 2 | Example 3 | Example 4 | Example 5 |
|---|---|---|---|---|---|
| Fiber reinforced plastic | | | | | |
| Fiber type | GF | GF | GF | GF | GF |
| Fiber form | SMC | SMC | SMC | SMC | SMC |
| Thermosetting resin | VE | VE | VE | VE | VE |
| Thickness X (mm) | 3 | 3 | 3 | 3 | 3 |
| Primer layer | No | No | No | No | No |
| Fire-resistant layer | | | | | |
| Matrix resin | Acrylic resin | Acrylic resin | Acrylic resin | Acrylic resin | Acrylic resin |
| Foaming agent | Ammonium polyphosphate | Ammonium polyphosphate | Ammonium polyphosphate | Ammonium polyphosphate | Ammonium polyphosphate |
| Thickness Y (mm) | 0.2 | 0.3 | 0.4 | 0.5 | 0.5 |
| Mass per unit area (g/m$^2$) | 270 | 400 | 530 | 670 | 670 |
| Y/X | 0.067 | 0.100 | 0.133 | 0.167 | 0.167 |
| Top layer | No | No | No | No | Yes |

| | Example 1 | Example 2 | Example 3 | Example 4 | Example 5 |
|---|---|---|---|---|---|
| Evaluation of Fire-resistance | | | | | |
| Form retention | Good | Good | Good | Good | Good |
| Burning form | - | - | - | - | - |
| Retention rate of strength after fire-resistant property evaluation | 59% | 61% | 53% | 56% | |
| Fire-resistant property after water absorption | | | | 23% | 54% to 72% |
| Falling-off of battery | No | No | No | No | No |

[Table 1] (continued)

| | Example 6 | Example 7 | Example 8 | Example 9 | Comparative Example 1 | Comparative Example 2 |
|---|---|---|---|---|---|---|
| Fiber reinforced plastic | | | | | | |
| Fiber type | GF | GF | GF | GF | GF | GF |
| Fiber form | SMC | SMC | SMC | SMC | SMC | SMC |
| Thermosetting resin | VE | VE | VE | VE | VE | VE |
| Thickness X (mm) | 3 | 3 | 3 | 3 | 3 | 3 |
| Primer layer | Yes | No | No | No | No | No |
| Fire-resistant layer | | | | | | |
| Matrix resin | Acrylic resin | Urethane-based resin | Urethane-based resin | Urethane-based resin | No | Non-foaming flame-retardant coating |
| Foaming agent | Ammonium polyphosphate | Ammonium polyphosphate | Ammonium polyphosphate | Ammonium polyphosphate | - | - |
| Thickness Y (mm) | 0.5 | 0.3 | 0.5 | 0.5 | - | 0.2 |
| Mass per unit area (g/m$^2$) | 670 | 410 | 680 | 680 | - | 200 |
| Y/X | 0.167 | 0.100 | 0.167 | 0.167 | - | 0.067 |
| Top layer | No | No | No | Yes | No | No |

| | Example 6 | Example 7 | Example 8 | Example 9 | Comparative Example 1 | Comparative Example 2 |
|---|---|---|---|---|---|---|
| Evaluation of Fire-resistance | | | | | | |
| Form retention | Good | Good | Good | Good | Bad | Bad |
| Burning form | - | - | - | - | Resin was carbonized | Resin was carbonized |
| Retention rate of strength after fire-resistant property evaluation | | 81% | 83% | | 26% | - |
| Fire-resistant property after water absorption | | | 17% to 44% | 38% to 70% | - | - |
| Falling-off of battery | No | No | No | No | Fall off | Fall off |

[Reference Example 1]

A test piece was prepared and evaluated in the same manner as in Example 4, except that a fiber reinforced plastic of a carbon fiber woven fabric using continuous fibers (Pre-preg W-7U 61(100)/Q-112 manufactured by TEIJIN LIMITED, thickness: 3 mm) was used as the fiber reinforced plastic. Results are shown in Table 2.

[Reference Example 2]

A test piece was prepared and evaluated in the same manner as in Example 4, except that a fiber reinforced plastic of a glass fiber woven fabric using continuous fibers (glass epoxy laminated board (product number: PL-3762) manufactured by Sumitomo Bakelite Co., Ltd.) was used as the fiber reinforced plastic. Results are shown in Table 2.

[Reference Examples 3 and 4]

Test pieces were prepared and evaluated in the same manner as in Reference Example 1 or 2, except that the fire-resistant layer was not provided. Results are shown in Table 2.

[Table 2]

| | Reference Example 1 | Reference Example 2 | Reference Example 3 | Reference Example 4 |
|---|---|---|---|---|
| Fiber reinforced plastic | | | | |
| Fiber type | CF | GF | CF | GF |
| Fiber form | Woven fabric | Woven fabric | Woven fabric | Woven fabric |
| Thermosetting resin | EP | EP | EP | EP |
| Thickness (mm) | 3 | 3 | 3 | 3 |
| Primer layer | No | No | No | No |
| Fire-resistant layer | | | | |
| Matrix resin | Acrylic resin | Acrylic resin | - | - |
| Foaming agent | Ammonium polyphosphate | Ammonium polyphosphate | - | - |
| Film thickness | 0.5 | 0.5 | - | - |
| Top layer | No | No | No | No |
| | | | | |
| Evaluation of Fire-resistance | | | | |
| Form retention | Good | Good | Bad | Bad |
| Burning form | - | - | Resin was carbonized and continuous fibers remained unburned. | Resin carbonized and continuous fibers remained unburned. |
| Retention rate of strength after fire-resistant property evaluation | - | - | - | - |
| Falling-off of battery | No | No | No | No |

(Discussion of Reference Example)

In Reference Examples, the battery does not fall off regardless of the presence or absence of the fire-resistant layer. This is because even when the resin is carbonized, the continuous fibers are held by the resin in a region where the resin is not carbonized, so that the battery is supported by the fibers. Therefore, when the fiber reinforced plastic contains continuous fibers, there is no problem that the battery falls off from the battery tray after the burning test.

[Comparative Example 3]

A test piece was prepared and evaluated in the same manner as in Example 1, except that instead of the fire-resistant layer, a mica sheet (thickness: 0.8 mm) was attached to a flat plate-shaped SMC molded product. During burning, there was floating and peeling in the mica sheet layer, and the heat insulating effect was unstable.

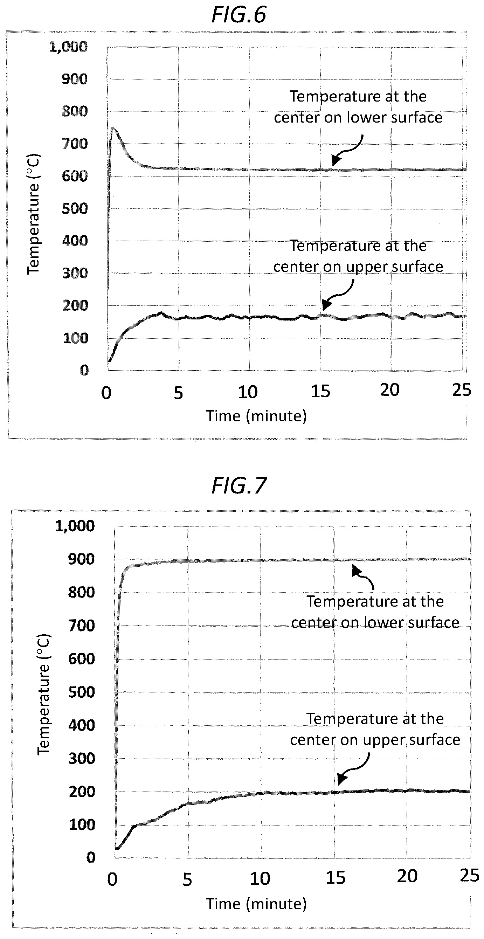

Fig. 6 is a graph showing temperatures of an upper surface and a lower surface (burned surface) of the test piece during the fire-resistance test in Example 2. Fig. 7 is a graph showing temperatures of an upper surface and a lower surface (burned surface) of the test piece during the fire-resistance test in Comparative Example 3. The temperature was measured at the center of the surface on both the upper surface and the lower surface.

By comparing Fig. 6 with Fig. 7, it is found that the fire-resistant layer of Example 2 can prevent the temperature rise of the upper surface and the lower surface (burned surface) as compared with the mica sheet of Comparative Example 3.

INDUSTRIAL APPLICABILITY

The battery box component provided with the fire-resistant layer on the fiber reinforced plastic described in the present invention have an excellent fire-resistant property and mechanical properties as compared with those in the related art.

Although the present invention has been described in detail with reference to a specific embodiment, it will be apparent to those skilled in the art that various changes and modifications can be made without departing from the spirit and the scope of the present invention.

This application is based on a Japanese Patent Application (Japanese Patent Application No. 2020-077534) filed April 24, 2020, the contents of which are incorporated herein by reference.

REFERENCE SIGNS LIST

10 battery box
20, 100, 200 battery tray
22 bottom of battery tray
24, 24' sidewall of battery tray
26, 26' end wall of battery tray
28 cavity
29 inner partition wall
30, 30' energy absorption member
32 fastener (fastens energy absorption member and battery tray)
40 battery cover
50 battery
52 voltage line
60 reinforcing frame
70 temperature control system
301 screen
302 test piece
303 sheet metal pan
T1, T2 edge surface of battery tray
S1, S2 burnt portion of resin around edge surface that may occur in fire-resistance test when edge surface of battery tray is not covered with fire-resistant layer
F flange
G first bottom surface portion
SW peripheral wall
W1 first inner wall portion
W2 second inner wall portion

**Claims**

1. A battery box component comprising:

   a fiber reinforced plastic containing a thermosetting resin as a matrix resin and reinforcing fibers; and
   a fire-resistant layer on the fiber reinforced plastic, wherein
   the reinforcing fibers are discontinuous reinforcing fibers having a weight average fiber length of 1 mm or more and 100 mm or less,
   the thermosetting resin is at least one selected from the group consisting of an unsaturated polyester-based resin, a vinyl ester-based resin, and an epoxy resin,
   the fiber reinforced plastic has a thickness X of 1.0 mm or more and less than 5 mm, and
   the fire-resistant layer contains an acrylic resin or a urethane-based resin, and a foaming composition.

2. The battery box component according to claim 1, wherein the fire-resistant layer contains a urethane-based resin, and the fireproof layer is adjacent to the fiber reinforced plastic.

3. The battery box component according to claim 2, wherein the thermosetting resin is an unsaturated polyester-based resin or a vinyl ester-based resin.

4. The battery box component according to any one of claims 1 to 3, wherein the fire-resistant layer has a thickness Y of 0.1 mm or more and less than 1.0 mm.

5. The battery box component according to claim 4, wherein a relationship between the thickness X of the fiber reinforced plastic and the thickness Y of the fire-resistant layer satisfy $0.01 < Y/X < 1.0$.

6. The battery box component according to any one of claims 1 to 5, wherein the fire-resistant layer has a mass per unit area of 100 g/m$^2$ to 1200 g/m$^2$.

7. The battery box component according to any one of claims 1 to 6, wherein the reinforcing fibers are glass fibers.

8. The battery box component according to any one of claims 1 to 7, wherein the fiber reinforced plastic has a specific gravity of 2.1 g/cm$^3$ or less, and the fire-resistant layer has a specific gravity of 1.5 g/cm$^3$ or less.

9. The battery box component according to any one of claims 1 to 8, wherein the battery box component is for use in a vehicle.

10. The battery tray according to claim 9, wherein the battery box component is a battery tray, and has a retention rate of tensile strength after a burning test of 40% or more as compared with tensile strength before the burning test.

11. The battery tray according to claim 9 or 10, wherein the battery box component is a battery tray, and further comprising a top layer laminated on the fire-resistant layer.

12. The battery box component according to any one of claims 1 to 9, wherein the battery box component is a battery tray or a battery cover.

13. A method for producing the battery box component according to any one of claims 1 to 12, the method comprising:

    producing the fiber reinforced plastic by molding a sheet molding compound, wherein
    the battery box component has a concavo-convex shape.

14. The method for producing a battery box component according to claim 13, further comprising:
    providing the fire-resistant layer on the fiber reinforced plastic by using in-mold coating or spray coating.

15. The battery box component according to any one of claims 1 to 12, wherein the fire-resistant layer is provided on an edge surface of the fiber reinforced plastic.

16. The battery box component according to claim 15, wherein the fire-resistant layer is provided on a side surface and an entire edge surface of the fiber reinforced plastic.

17. The battery box component according to claim 16, wherein the battery box component is a battery tray.

FIG.1

*FIG.2*

*FIG.3*

*FIG.4*

100

S1

S2

T1

T2

*FIG.5*

200

F

F

SW

W1

W2

SW

G

G

## FIG.6

Temperature at the center on lower surface

Temperature at the center on upper surface

## FIG.7

Temperature at the center on lower surface

Temperature at the center on upper surface

## INTERNATIONAL SEARCH REPORT

International application No.

**PCT/JP2021/015783**

### A. CLASSIFICATION OF SUBJECT MATTER

***H01M 50/222***(2021.01)i; ***H01M 50/227***(2021.01)i; ***H01M 50/229***(2021.01)i; ***H01M 50/231***(2021.01)i; ***H01M 50/24***(2021.01)i

FI: H01M50/229; H01M50/222; H01M50/227; H01M50/24; H01M50/231

According to International Patent Classification (IPC) or to both national classification and IPC

### B. FIELDS SEARCHED

Minimum documentation searched (classification system followed by classification symbols)

H01M50/222; H01M50/227; H01M50/229; H01M50/231; H01M50/24

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2012-094476 A (HYUNDAI MOTOR CO., LTD.) 17 May 2012 (2012-05-17) paragraphs [0022]-[0036] | 1, 4, 6-7, 9, 12-14 |
| A | | 2-3, 5, 8, 10-11, 15-17 |
| Y | JP 2013-191440 A (TOSHIBA CORP.) 26 September 2013 (2013-09-26) paragraphs [0021]-[0030], [0034]-[0036], example 4 | 1, 4, 6-7, 9, 12-14 |
| A | | 2-3, 5, 8, 10-11, 15-17 |
| Y | JP 2014-062189 A (MITSUBISHI MOTORS CORP.) 10 April 2014 (2014-04-10) claims | 1, 4, 6-7, 9, 12-14 |
| A | WO 2019/152072 A1 (TPI COMPOSITES, INC.) 08 August 2019 (2019-08-08) | 1-17 |
| A | JP 2016-030246 A (INOUE MTP KK) 07 March 2016 (2016-03-07) | 1-17 |
| A | JP 2019-102253 A (TIGERS POLYMER CORP.) 24 June 2019 (2019-06-24) | 1-17 |

☑ Further documents are listed in the continuation of Box C. ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **16 June 2021** | **06 July 2021** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (January 2015)

# EP 4 024 588 A1

**INTERNATIONAL SEARCH REPORT**

International application No.

**PCT/JP2021/015783**

**C.    DOCUMENTS CONSIDERED TO BE RELEVANT**

| Category* | Citation of document, with indication, where appropriate, of the relevant passages | Relevant to claim No. |
|---|---|---|
| A | JP 2019-131654 A (SEKISUI CHEMICAL CO., LTD.) 08 August 2019 (2019-08-08) | 1-17 |

Form PCT/ISA/210 (second sheet) (January 2015)

26

INTERNATIONAL SEARCH REPORT
Information on patent family members

International application No.

**PCT/JP2021/015783**

| Patent document cited in search report | | | Publication date (day/month/year) | Patent family member(s) | | | Publication date (day/month/year) |
|---|---|---|---|---|---|---|---|
| JP | 2012-094476 | A | 17 May 2012 | US 2012/0103714 A1 paragraphs [0038]-[0064] KR 10-2012-0044853 A | | | |
| JP | 2013-191440 | A | 26 September 2013 | US 2013/0244089 A1 paragraphs [0030]-[0039], [0043]-[0046], example 4 | | | |
| JP | 2014-062189 | A | 10 April 2014 | (Family: none) | | | |
| WO | 2019/152072 | A1 | 08 August 2019 | US 2019/0237720 A1 | | | |
| JP | 2016-030246 | A | 07 March 2016 | (Family: none) | | | |
| JP | 2019-102253 | A | 24 June 2019 | (Family: none) | | | |
| JP | 2019-131654 | A | 08 August 2019 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014062189 A
- JP 2012006986 A
- WO 2020014470 A
- JP 2020077534 A